# FASCICULE DE BREVET EUROPEEN

(11) **EP 2 920 133 B1**
(45) Date de publication et mention de la délivrance du brevet: **02.01.2019**
(21) Numéro de dépôt: 13789844.1
(22) Date de dépôt: 15.11.2013
(51) Int. Cl.: A01G 24/00, C05F 11/08, A01N 65/00, C05G 3/02

(54) **COMPOSITION POUR PRALINAGE DE RACINES DE PLANTES**
ZUSAMMENSETZUNG ZUR TAUCHBEHANDLUNG VON PFLANZENWURZELN
COMPOSITION FOR DIP TREATMENT OF PLANT ROOTS

(30) Priorité: 15.11.2012 FR 1260889
(43) Date de publication de la demande: 23.09.2015
(73) Titulaire: Agrauxine, 49070 Beaucouzé (FR)
(72) Inventeur: COUTANT, Antoine, F-49070 Beaucouzé (FR); REVEILLAUD, Maud-Cécile, F-49070 Beaucouzé (FR); BLAL, Bachar, F-49070 Beaucouzé (FR)
(74) Mandataire: Flesselles, Bruno F.G.
(86) Numéro de dépôt international: PCT/EP2013/073999
(87) Numéro de publication internationale: WO 2014/076263

(56) Documents cités:
- EP-A1- 0 654 482
- WO-A1-98/21167
- WO-A1-2004/005219
- US-A- 4 975 105
- US-A- 5 344 471
- US-A1- 2007 163 173
- US-B1- 6 258 749
- Deosen USA: "Ziboxan F200 Specification", USA , 1 March 2012 (2012-03-01), Retrieved from the Internet: URL:http://deosenusa.com/por/docs/Deosen_I ND80.pdf [retrieved on 2018-01-09]

## Description

L'invention se rapporte au domaine des fertilisants, et notamment des produits destinés à améliorer, stimuler la nutrition, le développement et la croissance des plantes.

Le pralinage consiste à enduire les racines d'un rosier, d'un arbre ou d'un arbuste, ou de toute autre plante, d'un mélange qui aidera à la reprise lors de la plantation. Ainsi, le pralinage favorise la cicatrisation des parties coupées et aide rosiers et arbustes et autres plantes à former de nouvelles racines et radicelles plus rapidement.

On peut préparer soit même son pralin, en utilisant une mixture liquide traditionnellement constituée de terre de jardin, d'eau et de bouse de vache, pour enrober les racines de la plante.

Toutefois, les pralins commerciaux peuvent contenir d'autres composés destinés à favoriser une reprise encore plus rapide. On peut ainsi ajouter des hormones de bouturage, mais également des champignons mycorhiziens.

Une mycorhize est le résultat de l'association symbiotique entre des champignons et les racines des plantes. Il s'agit d'une symbiose entre la plante et le champignon. Les filaments externes du mycélium se combinent aux racines des plantes et constituent ainsi un véritable prolongement du système racinaire qui va explorer le sol dans la périphérie de la racine. Le réseau mycélien dans le sol peut ainsi atteindre plusieurs millions de km/hectare, multipliant la zone de prospection des racines par 20 à 25. Le mycélium n'est pas cloisonné, fluidifiant ainsi les transferts d'eau et éléments minéraux.

Cette association est généralement de type symbiotique, le champignon contribuant à recycler la nécromasse de son hôte, au profit de leurs deux descendances.

Les endomycorhizes sont la forme la plus répandue. On peut notamment citer les endomycorhizes à arbuscules ou arbusculaires (AM). Ainsi, les champignons mycorhiziens arbusculaires colonisent environ 80 % des plantes vasculaires terrestres, c'est-à-dire plus de 400 000 espèces, bien qu'il n'existe que moins de 200 espèces de champignons endomycorhiziens. Ainsi, étant peu spécifique dans leur relation de symbiose, chaque espèce possède un grand potentiel d'adaptabilité et une large diversité génétique.

D'un point de vue cellulaire, les endomycorhizes arbusculaires traversent la paroi cellulosique mais ne pénètrent pas la membrane plasmique de la cellule végétale, se contentant de provoquer une invagination de la membrane de celle-ci. Cela a pour effet d'accroître la surface de contact entre l'hyphe et la cellule de la plante et ainsi faciliter l'échange de métabolites entre les deux partenaires.

Les endomycorhizes arbusculaires sont très largement des champignons de la division des Gloméromycètes ayant perdu la reproduction sexuée. Les hyphes s'étendent dans le parenchyme cortical de la racine, formant des vésicules contenant des réserves, et des structures ramifiées, les arbuscules. Ils se reproduisent donc uniquement asexuellement. Cependant les hyphes d'individus différents peuvent fusionner, ce qui rend possible un échange génétique et une forme de parasexualité.

La mycorhization des plantes par les champignons mycorhiziens permet d'améliorer plusieurs processus physiologiques des plantes notamment, la nutrition minérale et hydrique, la régulation hormonale, la stimulation des mécanismes de défenses. Ces effets aboutissent à une plus grande résistance des plantes au stress du rempotage ou de la plantation permettant ainsi d'obtenir un meilleure taux de reprise des plantes lors de cette étape cruciale dans l'implantation de certaines cultures (viticulture, arboriculture, cultures ornementales...).

Parmi les champignons endomycorhiziens, on peut citer le genre *Glomus sp* et plus précisément la souche *Glomus spp* codée LPA Val1, principe actif du produit SolRize® développé par la Demanderesse, et ayant obtenu une homologation en France (n° 1020004). Solrize® permet de mycorhizer les plantes et a pour effet :
✔ d'optimiser leur reprise ;
✔ d'homogénéiser la plantation ;
✔ d'améliorer leur résistance aux stress (abiotiques et biotiques) ;
✔ de favoriser leur enracinement ;
✔ d'améliorer leur nutrition ;
✔ de diminuer l'apport d'intrants.

Le produit Solrize® se présente sous forme de granulé et contient le champignon endomycorhizien *Glomus sp* à une concentration minimale de 10 propagules par gramme. Le produit commercial Solrize®, peut être utilisé en pralin. Dans ce cas il est commercialisé sous le nom Solrize® Pralin par la Demanderesse. Un sac de Solrize® Pralin contient 3,5kg de Solrize® et 1 sachet de 1kg de pralin. Le pralin est principalement constitué d'argile et d'un agent épaississant. Le produit fini est obtenu en ajoutant de l'eau à ces deux éléments, et en mélangeant le tout de façon afin d'obtenir une pâte homogène La formulation de Solrize® Pralin est bien adaptée pour mycorhizer (donc traiter) des plants à racines nues, juste au moment de leur plantation. Cela concerne notamment les plants de vigne, plants d'arbres fruitier, les arbustes d'ornements etc... La formulation de la préparation Solrize® Pralin est particulièrement adaptée pour le pralinage de plants que l'on manipule peu, voire pas du tout, avant ou au moment de la plantation dans le trou. En effet, le Solrize® Pralin permet une bonne adhérence du produit sur les racines des plants mais, l'argile utilisée dans sa formulation, sèche assez rapidement. Ce séchage entraîne une perte d'adhérence du produit aux racines du plant ayant pour conséquence une perte de substance active appliquée aux racines, notamment si l'on manipule trop les plants ou si le délai entre pralinage et plantation est important. Ce risque de perte de substance active sur les racines peut donc entraîner une variabilité de la dose de produit Solrize par plant, voire une perte de l'expression des effets revendiqués du produit Solrize dû notamment à des doses de produit par plant insuffisantes.

Le Solrize® Pralin permet d'avoir d'excellents résultats pour la reprise des plantes. Cependant, dans un souci permanent d'optimisation du temps de travail, de plus en plus de plantations se font par les pépiniéristes fournisseurs des plants. Dans ce cas, les plantations sont mécanisées, et les plants sont parfois préparés la veille et regroupés dans des conteneurs. Ce procédé permet un rendement à l'heure (nombre de plant plantés/heure) plus élevé mais la mécanisation entraîne une manipulation accrue des plants. Face à cette mécanisation de la plantation, la Préparation Solrize® Pralin n'est pas nécessairement la plus adaptée.

La Demanderesse a donc recherché à développer une nouvelle formulation de pralinage, qui soit adapté à ce nouveau contexte de plantation, c'est-à-dire qui permette la préparation de plants « pralinées » plusieurs heures avant la plantation, et qui permette une manipulation des plantes ainsi pralinées.

US 2007/163173 décrit un polymère d'amidon greffé et réticulé, pour réaliser un gel pour tremper les racines de plantes. L'amidon greffé et réticulé ne peut probablement pas être qualifié de polyoside ramifié.

WO 2004/005219 celui-ci décrit une composition pour l'inoculation de rhizobium lors de la germination et la croissance de plantes. Toutefois, cette composition ne contient pas de polyoside ramifié et est destinée à enrober les semences (voir page 12, dernier paragraphe) alors que le composition selon l'invention est destinée au pralinage, c'est-à-dire à enrober les racines.

US 5,344,471 décrit des compositions de pralinage pour apporter un microorganisme mycorhizien aux racines de plantes. De nombreuses compositions putatives (méthylcellulose, carboxyméthylcellulose, l'hydroxypropylméthyl-cellulose...) sont listées ainsi que de nombreux microorganismes.

US 4,975,105 D4 divulgue une composition pour le pralinage des plantes comprenant un polymère super absorbant tel que de l'amidon réticulé et un champignon mycorhizien.

US 6,258,749 divulgue formulation pouvant être utilisée pour le pralinage des plantes comprenant un ou plusieurs polyacylglucosides et une substance d'intérêt agronomique telle que des nutriments (fer, manganèse).

Aucun de ces documents ne décrit ni ne suggère le problème technique que cherche à résoudre la Demanderesse dans le cadre de la présente invention. c'est-à-dire la possibilité de préparer des compositions de pralinage bien avant l'utilisation et/ou de préparer des plantes pralinées et les conserver plusieurs heures ou plusieurs jours avant plantation. Par ailleurs, les compositions sont préparées par solubilisation d'un polymère dans un système aqueux, puis ajout de l'agent d'intérêt (endomycorhize), ce qui nécessite deux étapes d'intervention et de mélange (le polymère au système liquide puis le système polymérique avec l'agent d'intérêt).

Dans un premier aspect, l'invention se rapporte à une composition pour pralinage / enrobage de racines de granulométrie inférieure ou égale à 5 mm comprenant un polyoside ramifié, ce polyoside étant la gomme xanthane, ainsi qu'une substance d'intérêt que l'on souhaite apporter à la plante. Un autre objet de l'invention est l'utilisation d'un polyoside ramifié pour la préparation d'une composition destinée à recevoir un principe actif ou une substance d'intérêt et à être utilisée pour le pralinage / enrobage des racines de plantes, ce polyoside étant la gomme xanthane. Ledit principe actif comprend un champignon endomycorhizien ou un microorganisme antifongique et peut également comprendre tout autre microorganisme ou toute autre substance destinée à être apportée à une plante que l'on souhaite planter, afin notamment d'améliorer la reprise de la croissance, de permettre de lutter contre des pathogènes ou maladies, ou d'améliorer la production de biomasse des plantes. Il peut aussi s'agir d'une combinaison de principes actifs.

Cette composition est également appelée Mycogel®. Après ajout d'eau, ladite composition se présente sous la forme d'un gel, ce qui permet notamment une bonne adhésion aux racines de plantes.

Une méthode d'apport d'une substance d'intérêt aux racines d'une plante, comprenant les étapes de (i) intégrer ladite substance d'intérêt dans une composition comprenant un polyoside ramifié, ce polyoside étant la gomme xanthane et ladite substance d'intérête étant un champignon endomycorhizien ou un microorganisme antifongique, afin d'obtenir une composition de pralinage (ou préparer une composition de pralinage contenant ladite substance d'intérêt et ce polyoside ramifié) et (ii) appliquer cette composition de pralinage aux racines de ladite plante (notamment par trempage des racine dans ladite composition de pralinage), est également un objet de l'invention. L'application de cette composition de pralinage aux racines de la plante pourra donc mener à l'enrobage desdites racines, permettant ainsi l'apport de la substance d'intérêt à la plante.

D'une façon générale, une substance d'intérêt est une substance qui est utilisée dans le domaine agronomique pour son application sur des plantes ou végétaux, notamment afin d'améliorer la santé, la croissance, et/ou le développement de biomasse de ces plantes ou végétaux.

Une substance d'intérêt (principe actif) peut ainsi comprendre des microorganismes en particulier fongiques (champignons endomycorhizien ou exomycorhizien, *hyphomycète*, *ascomycètes dont Trichoderma spp*, *Actinomycète*, *Deuteromycetes*), des bactéries (notamment *Bacillus et Lactobacillus spp*, *Paenibacillus spp*, *Azospirillum spp*, *Pseudomonas spp*,) ou bien des substances naturelles de type oligosaccharides, peptides, glycolipides, extraits de plantes ou d'algues, huiles essentielles. Dans le cadre de l'invention, la substance d'intérêt est un champignon endomycorhizien ou un microorganisme antifongique.

Est aussi décrite une composition de granulométrie inférieure ou égale à 5mm, qui comprend :
- des particules de polyoside ramifié, ce polyoside étant la gomme xanthane, d'un diamètre supérieur à 70 microns, de préférence supérieur à 100 microns, de façon plus préférée supérieur à 150 microns, et inférieur à 177 microns
- un principe actif d'intérêt étant un champignon endomycorhizien ou un microorganisme antifongique se présentant sous forme « sèche » (telle qu'un microorganisme ou substance naturelle séché ou lyophilisé, ou des spores ou propagules pour les microorganismes fongiques)
- éventuellement des particules d'une matrice neutre (telle que de l'argile) stabilisant le principe actif.

De préférence, cette composition présente une Aw (activité d'eau) inférieure ou égale à 0,95. Cette composition est donc solide (par opposition à une composition liquide, en suspension dans un liquide, pâteuse ou gélifiée), et est préférentiellement particulaire. La taille des particules dans cette composition est variable selon les composants. Ainsi, la spores de champignons sont généralement plus petites que les particules de la gomme xanthane, qui sont elles-mêmes plus petites que les particules de matrice neutre. En revanche, on recherche une certaine homogénéité pour la taille de chacun des composants.

Normalement, l'activité de l'eau est mesurée sur de petits échantillons enfermés hermétiquement dans un compartiment de mesure muni d'un élément sensible d'humidité. Lors de la mesure successive de plusieurs échantillons, l'élément sensible traverse un cycle d'humidité complet à chaque mesure. Cette opération ne doit ni influencer l'exactitude de la mesure, ni provoquer une hystérésis du signal de sortie. Enfin, les additifs volatiles ne doivent pas influencer l'élément sensible. Les éléments sensibles d'humidité Hygromer® et Hygrolyt® de Rotronic (Suisse), ou LabSwift-aw® de Novasina (Suisse) répondent à ces critères.

Cette mesure de l'activité de l'eau est donc commune et bien connue dans l'art.

Cette composition permet d'obtenir une composition de pralinage par ajout d'une quantité adaptée d'eau.

En particulier, cette composition contient entre 6 et 15 g de polyoside ramifié, ce polyoside étant la gomme xanthane, si l'on veut ajouter un litre d'eau.

La quantité de principe actif est déterminée en fonction de la nature du principe actif. Pour un champignon endomycorhizien, on utilise entre 3000 et 4000 propagules pour 1 litre d'eau. Pour un Trichoderma, on utilise entre 0.05 et 0.2 g/L de spores, de préférence entre 0.08 et 0.12 g/L (10⁸ à 10⁹ CFUs par gramme).

Le polyoside ramifié est la gomme xanthane.

De préférence, le principe actif est un champignon endomycorhizien, tel que listé ci-dessous, notamment du genre *Glomus* sp, appartenant au groupe des gloméromycètes. On stabilise préférentiellement les propagules avec de l'argile ou tout autre support neutre.

Dans un autre mode de réalisation, le principe actif est un champignon du genre *Trichoderma.*

Dans un autre mode de réalisation, le principe actif est un mélange de *Trichoderma* et de *Glomus.*

L'invention se rapporte en particulier à l'utilisation d'un polyoside ramifié, ce polyoside étant la gomme xanthane pour la préparation d'une composition contenant également un champignon endomycorhizien (ou une autre substance d'intérêt selon la revendication 1), et destinée au pralinage/enrobage racinaire. La composition ainsi obtenue est la composition particulaire et est directement utilisable pour pralinage après que l' on a ajouté la quantité d'eau nécessaire). Les méthodes de préparation d'une composition, comprenant le mélange de la gomme xanthane, et d'une substance d'intérêt (en particulier un champignon endomycorhizien), avec ou sans ajout ultérieur d'eau, sont également décrits.

L'invention se rapporte ainsi à l'utilisation d'un polyoside ramifié, ce polyoside étant la gomme xanthane, pour la préparation d'une composition destinée à apporter une substance d'intérêt aux racines d'une plante par pralinage. Dans un mode de réalisation particulier, ladite composition a été préparée quelques jours (la veille, 2 ou 3 jours, voire jusqu'à 7 jours ou un mois) avant application sur la plante.

On souhaite que la composition destinée au pralinage puisse permettre une bonne dispersion de la substance d'intérêt, et que l'on puisse imprégner les racines aisément (notamment par trempage, ce qui signifie que l'on peut rendre la composition liquide, notamment en la travaillant mécaniquement) et que cette composition persiste (se solidifie) sur les racines de la plante cible après application sur celles-ci. Il s'agit donc préférentiellement d'une composition gélifiée à température ambiante, mais qui se liquéfie lors qu'elle est travaillée. Ceci permet ainsi la conservation et la manipulation des plantes après application de la composition sur les racines.

L'utilisation d'un polyoside ramifié (gomme xanthane) permet ainsi d'obtenir un gel qui se liquéfie quand il est travaillé (par cisaillement) et dans lequel le champignon (ou tout autre substance d'intérêt, formulée) est préalablement mélangé (dans le gel) de façon homogène, pour ensuite tremper les plants à racines nues par botte (de 25 ou 50 plants) directement dans un grand bac et cela depuis le hangar avant plantation. Ce gel durcit après trempage des plants pour une meilleure fixation et limitation des pertes à la manipulation (transports...). Il est préféré que l'efficacité de mycorhization (ou de la substance d'intérêt) doit être maintenue, voire accentuée. Enfin, cette composition « gélose à base de polyoside ramifié » présente une aptitude au vieillissement et à la conservation pour une utilisation étalée sur 2 à 3 jours. Ce polyoside ramifié (gomme xanthane) a ainsi des propriétés gélifiantes préférentiellement quand il est mis en contact d'eau.

Est décrite une composition pour pralinage comprenant un champignon endomycorhizien (ou une autre substance d'intérêt selon la revendication 1) et un polyoside ramifié, ce polyoside étant la gomme xanthane. Cette composition se présente préférentiellement sous forme d'un gel dont la viscosité diminue lorsqu'on le mélange. Ainsi, la viscosité du gel est diminuée sous l'effet de forces de cisaillement.

On décrit ainsi l'utilisation d'un champignon endomycorhizien (ou d'une autre substance d'intérêt selon la revendication 1) et d'un polyoside ramifié, ce polyoside étant la gomme xanthane, pour la préparation d'une composition destinée au pralinage des racines d'une plante.

La Demanderesse a en effet montré que l'on peut utiliser un polyoside ramifié, ce polyoside étant la gomme xanthane, pour la préparation d'une composition destinée à apporter un champignon endomycorhizien (ou toute autre substance d'intérêt) à une plante, en particulier à ses racines. La préparation de cette composition (gel) peut être réalisée le jour même ou bien quelques jours (la veille, 2, 3, voire jusqu'à 7 jours) avant la date d'utilisation (application sur la plante) de ce dernier et peut être ainsi conservée. Le délai d'utilisation optimale du gel varie de 2 à 7 jours en fonction de la température de conservation de la préparation réalisée.

Le polyoside ramifié (gomme xanthane) est biodégradable, c'est-à-dire qu'il peut être dégradé par les microorganismes du sol sans laisser de résidus toxiques. Ce polyoside ne va donc pas présenter de toxicité pour l'environnement ou pour les êtres vivants : On peut notamment utiliser la gomme xanthane ayant reçu une autorisation de mise sur le marché en tant qu'additif alimentaire.

Un polyoside ramifié décrit ici n'est pas le galactomannane. En particulier, ce polyoside ramifié, étant la gomme xanthane, est tel qu'il comprend plusieurs unités d'oses sur ses ramifications, notamment 3 unités osiques.

Le polyoside ramifié est constitué d'une combinaison glucose, mannose, acide glucuronique et acide pyruvique. Il s'agit de la gomme xanthane (CAS : 11138-66-2; EINECS : 234-394-2), de formule brute C₃₅H₄₉O₂₉.

Cette gomme xanthane se présente, de préférence, sous une forme pulvérulente dont les particules ont une taille inférieure à 177 microns. En effet, on préfère utiliser une gomme xanthane de 80 MESH.

La notion de MESH est utilisée pour définir la finesse des abrasifs. En anglais, MESH signifie « MAILLE » et la valeur associée exprime le nombre de mailles par pouce. Ainsi, l'unité Mesh exprime le nombre de mailles d'un tamis par pouce (1 pouce ou inch= 2,54 cm). En conséquence, plus il y a de mailles, plus le chiffre Mesh est élevé, et plus le tamis sera fin. Ainsi, la taille des plus grosses particules susceptibles de passer au travers du tamis sera alors plus petite.

Ainsi, des particules de 80 Mesh ont une taille maximale de 177 microns. Dans le cadre de la présente invention, on pourrait aussi utiliser des particules de 100 Mesh (taille maximale de 149 microns). La composition selon l'invention est préparée par mélange du champignon endomycorhizien avec le polyoside ramifié, ce polyoside étant la gomme xanthane, puis ajout d'eau dans ce mélange. L'eau peut être de l'eau froide ou de l'eau tiède.

La taille des particules de gomme xanthane s'avère importante pour la mise en oeuvre de l'invention. En effet, une granulométrie fine (200 mesh) permettra d'avoir une hydratation plus rapide de la gomme, mais avec des risques de grumeaux. Un produit plus gros permet d'avoir une meilleure dispersion et d'éviter la formation de grumeaux, notamment dans les conditions de travail aux champs ou en atelier (conditions de faible agitation). C'est la raison pour laquelle on préfère utiliser les particules de tailles mentionnées ci-dessus (177 microns). En résumé, la taille des particules est préférentiellement inférieure à 250 micros, de préférence inférieure à 70 mesh, ou 200 microns car elle est inférieure à 177 microns, et supérieure à 100 mesh (ou 150 microns).

Si l'on formule avec de gros appareils, on peut aller jusqu'à utiliser des particules de 200 mesh (74 microns).

La taille des particules est ainsi supérieure à 70 microns de façon plus préférée 100 microns, de façon plus préférée 150 microns.

Dans un mode de réalisation préféré, une composition pour le pralinage obtenue par la mise en oeuvre de la composition décrite ici ne comprend que ledit champignon endomycorhizien, la gomme xanthane, ainsi que de l'eau (et éventuellement un support neutre stabilisant le champignon, tel que l'argile). Dans un autre mode de réalisation, la composition ne contient que la substance d'intérêt, ledit polyoside ramifié, ce polyoside étant la gomme xanthane, ainsi que de l'eau (et éventuellement un support neutre stabilisant le champignon, tel que l'argile). Ainsi, dans ces modes de réalisation, la composition ne contient qu'un seul composé ayant un activité sur la plante.

Dans un autre mode de réalisation, on peut ajouter d'autres composés à cette composition, tels que des hormones de bouturage ou, bien évidemment, d'autres micro-organismes ou substances bénéfiques pouvant avoir des effets complémentaires du Solrize® (*Trichoderma spp*, *Bacillus et Lactobacillus spp*, *Paenibacillus spp*, *Azospirillum spp*, *Pseudomonas spp, hyphomycète, ascomycètes*, *actinomycète*, *deuteromycetes*, oligosaccharides, peptides, glycolipides, extraits de plantes ou d'algues, huiles essentielles...).

Tout type de champignon (endomycorhizien ou ectomycorhizien) est cité dans le cadre de la présente description. On utilise toutefois de préférence un champignon endomycorhizien arbusculaire, et en particulier un champignon du genre Glomus sp et appartenant au groupe des gloméromycètes et en particulier la souche de Glomus sp LPA Val1, principe actif du produit Solrize® développé par la demanderesse, ayant obtenu une homologation en France (n° 1020004). Solrize® se présente sous forme d'argile contenant des spores et mycelium de *Glomus sp* associés aux particules d'argiles et à des fragments racinaires de plantes.

L'homme du métier est à même de déterminer les quantités de chacun des produits à apporter pour réaliser une composition de pralinage, sachant que l'on souhaite apporter entre 3 et 10g d'inoculum mycorhizien par plant praliné (soit entre 30 et 100 propagules) selon la taille du système racinaire.

Dans le cas de l'utilisation d'une autre substance d'intérêt, l'homme du métier déterminera la quantité à apporter à la plante, ce qui permettra d'identifier la concentration à utiliser en fonction de la quantité moyenne de produit qui se retrouvera sur les racines de cette plante.

Par ailleurs, l'homme du métier est à même de déterminer la quantité de gomme xanthane à ajouter dans la composition pour obtenir la viscosité et le comportement mécanique approprié.

Dans un mode de réalisation particulier, la composition comprend entre 3000 et 4000 propagules du dit champignon endomycorhizen, entre 7 et 15 g de ladite gomme xanthane, pour 1 litre d'eau. Cette quantité de gomme xanthane est la quantité préférée pour l'ensemble des applications envisagées dans la demande. On peut aussi utiliser entre 6 et 10 g de gomme xanthane pour 1 litre d'eau. On utilise ainsi au moins 6 g, de préférence au mois 7 g de gomme xanthane pour 1 litre d'eau, et au plus 15 g, de préférence au plus 12g de gomme xanthane pour 1 litre d'eau.

Ainsi qu'on l'a vu plus haut, l'invention se rapporte également à l'utilisation d'une composition telle que décrite plus haut pour réaliser un pralinage, ou en tant que biofertilisant.

Ce pralinage ou cette utilisation en tant que biofertilisant peut être effectué sur tout type de plante susceptible de former une endomycorhize. Elle est notamment réalisée sur toute culture pouvant faire l'objet de plantation. On envisage ainsi une utilisation dans les domaines de l'arboriculture fruitière, la viticulture, les arbres et arbustes d'ornement, la foresterie, les cultures légumières.

On peut citer les cultures maraîchères, telles que melon, tomate, fraise, aubergine, poivrons, courgettes, salade, haricots, les arbres fruitiers tel que pommiers, poiriers, pruniers, cerisiers, etc..., toutes plantes horticoles ou cultures florales (y compris les rosiers). On peut aussi citer une utilisation pour les arbres (Noyer, Frêne, platane, peuplier, sorbier,...) ou les arbustes (laurier, buis, millepertuis, lilas, buddleia, ...).

Il a notamment été montré que cette composition peut être utilisée sur les plants de vigne issus de pépinière traditionnelle.

L'invention se rapporte également à une méthode de plantation d'une plante, comprenant l'étape de planter une plante dans un substrat permettant la croissance de la plante, caractérisée en ce que les racines de la plantes sont enrobées par une composition selon l'invention. Ledit substrat peut être de la terre, du terreau ou tout autre substrat adapté à la plante en question. Il peut aussi contenir des éléments tels que la tourbe ou l'argile.

Dans un mode de réalisation préféré, l'enrobage des racines de la plante a été réalisée plus de 12 heures, de façon plus préférée plus de 24 heures, de façon plus préférée plus de deux jours, voire plus d'une, ou même deux semaines avant l'étape de plantation de la plante, notamment pour les plants de vigne. Les plantes sont conservées directement dans la composition de pralinage selon l'invention, ou plongées dans la composition et retirées de celle-ci, la composition durcissant alors en adhérant sur les racines des plantes qui sont alors conservées jusqu'à la plantation.

Les exemples montrent notamment que l'on peut conserver les pieds de vigne dans la composition selon l'invention, plus de trois semaines et au moins un mois.

### EXEMPLES

### Exemple 1 : test de plusieurs produits

On a testé les produits suivants :
- Guar 25 : composé principalement de galactomannane (polymère linéaire composé d'une chaine de monomères de mannose ((1,4)-beta-D-mannopyranose) auxquelles sont ramifiés par un pont 1-6 une unité de galactose).
- Xanthan 80 (Danisco®, gomme xanthane 80 mesh) : polyoside ramifié comprenant 4 unités osiques dans les ramifications
- LBG 246 (Gomme Caroube) : propriétés épaississantes dues à la de galactomannane
- FD 175 (Alginate) : polymère linéaire formé de deux monomères liés ensemble : le mannuronate et le guluronate

On a testé le pouvoir gélifiant de ces produits.

| **Nom** | **Dose testé 1%** | **Dose testé 0.2%** | **Conclusion** |
|---|---|---|---|
| LBG 46 Caroube | Aspect très liquide, avec peu de grumeaux | Aspect très liquide, avec peu de grumeaux | Gomme très liquide |
| Alginate FD 175 | Aspect plutôt visqueux mais beaucoup de grumeaux | Aspect plutôt visqueux mais beaucoup de grumeaux | Gomme plutôt à tendance visqueuse et gélifiante |
| Guar type 250 | Aspect liquide avec quelques grumeaux | Aspect liquide avec grumeaux | Gomme très liquide |
| Xanthan 80 | Aspect très visqueux, quelques grumeaux | Aspect moins visqueux, moins de grumeaux (base de départ) | Gomme visqueuse et gélifiante |

D'un point de vue texture (collant), le Xanthan et l'Alginate paraissent plus collants que la Guar et la Caroube et seraient donc les mieux à même de répondre aux attentes des pépiniéristes, notamment en ce qui concerne la capacité à se présenter sous forme liquide pour mélanger la substance d'intérêt et appliquer le produit sur les racines, et à se solidifier ultérieurement (sur les racines), ce qui permet une manipulation des plantes pralinées (le cahier des charges).

A la vue de ces résultats, seuls l'alginate et la gomme xanthane paraissent utilisables dans l'application envisagée.

On peut toutefois noter qu'il a semblé difficile de dissoudre ces gommes dans l'eau même à faible dose. Les résultats sont les mêmes avec de l'eau chaude.

### Exemple 2 : amélioration de la solubilité

On a testé différents dispersants pour tenter de résoudre le problème de dissolution des gommes dans l'eau.

| **Nom agent collant** | **Aspect** | **Conclusion** |
|---|---|---|
| LBG 46 Caroube | Pas homogène, huile remonte, très liquide | Gel trop liquide |
| Alginate FD 175 | Pas homogène, huile remonte, liquide | Gel trop liquide |
| Guar type 250 | Mélange homogène, liquide, légèrement épais mais pas beaucoup | Gel se rapprochant du cahier des charges attendu |
| Xanthan 80 | Mélange très homogène, aspect gélatineux | Gel correspondant au cahier des charges attendu |

| | | |
|---|---|---|
| Protocole appliqué : 5g de dispersant + 0.5g d'agent collant+ 97mL d'eau | | |

D'autres essais ont montré que la gomme xanthane est le produit permettant d'obtenir une composition présentant les meilleures propriétés de viscosité attendues.

En particulier, un test a été réalisé, et qui a consisté à tremper un plant de vigne dans toutes les solutions préparées afin d'évaluer l'adhérence des gels autour des racines.

Les résultats sont les plus prometteurs pour le Xanthan.

### Exemple 3 : Détermination d'une mise en oeuvre aisée de la composition

La réalisation de la composition consiste à mélanger le produit Solrize® Standard avec de la poudre de l'agent collant sélectionné, (en l'occurrence le Xanthane dans cet exemple) puis d'ajouter de l'eau afin d'obtenir un produit homogène et collant. Ce principe est simple à mettre en oeuvre pour l'utilisateur.

Il convient que la préparation de cette nouvelle formulation soit aussi simple que celle du produit Solrize Pralin : l'agent collant est directement mélangé au Solrize® puis l'eau est ajoutée ensuite.

Les essais réalisés sur les différents produits montrent que seul le Xanthan permet d'obtenir une composition remplissant les critères recherchés pour le produit (mélange aisé, bonne adhérence de la préparation aux racines et plants).

En effet, les essais avec l'alginate donnent un produit qui durcit avec le temps. Les essais avec la Guar ou la Caroube donnent des compositions trop liquides.

**Exemple 4 : Préparation de différentes compositions**

| **Composition de la préparation testée** | **Quantité de Solrize® (g/Plant de vigne)** | **J+1** | **J+2** | **J+3** | **J+7** |
|---|---|---|---|---|---|
| 175 g Solrize® +12 g Xanthan +850 mL H₂O | 5.83g Solrize®/plant | Produit homogène colle bien aux racines | Dur sur le dessus mais après mélange, idem J+1, donc satisfaisant | Idem J+2 | Commence à durcir, quelques grumeaux après mélange |
| 175 g Solrize® +18 g Xanthan +850 mL H₂O | 5.2g Solrize®/plant | Produit homogène colle bien aux racines | Dur sur le dessus mais après mélange, idem J+1, donc satisfaisant | Commence à durcir, quelques grumeaux après mélange | A durci, quelques grumeaux après mélange |
| 175 g Solrize® +24 g Xanthan +850 mL H₂O | 4.8g Solrize®/plant | Produit homogène colle bien aux racines | Dur sur le dessus mais après mélange, idem J+1, donc satisfaisant | Commence à bien durcir, quelques grumeaux après mélange | A durci, difficile à mélanger sans faire de grumeaux |
| 175 g Solrize® +30 g Xanthan +850 mL H₂O | 4g Solrize®/plant | Produit homogène colle bien aux racines | Dur sur le dessus mais après mélange, idem J+1, donc satisfaisant | Commence à bien durcir, quelques grumeaux après mélange | A durci, difficile à mélanger sans faire de grumeaux |

Les produits ont été évalués à température ambiante, et un contrôle manuel de l'adhérence aux racines d'un plant de vigne, utilisés comme modèle, a été effectué.

On constate que les compositions peuvent être conservées pendant au moins deux jours, voire pendant plus longtemps.

On a réalisé d'autres compositions comprenant :
360 g de Solrize®, 850 ml à 1.51 d'eau et diverses quantités de gomme Xanthan 80.

On observe que les meilleurs résultats sont obtenus lorsque l'on ajoute entre 7 et 15 g de Xanthan 80.

On a constaté que la composition comprenant 360 g de Solrhize®, 1 litre d'eau et 10 g de Xanthan 80, semble présenter les propriétés les plus favorables.

### Exemple 5 : test d'application de la composition sélectionnée sur des plants de vigne

On teste donc une composition comprenant 360 g de Solrhize®, 1000 ml d'eau et 10 g de Xanthan 80.

| Nombre de plants de vigne pouvant être pralinés | Quantité de gel+Solrize® (g/Plant de vigne) | Quantité de gel (g/Plant de vigne) | Quantité de Solrize® (g/Plant de vigne) |
|---|---|---|---|
| 120 | 11 à 13 g/plants | 6 à 8 g/plants | 3 g/plant |

On a mesuré le pH de la composition au cours du temps :
pH gel = 7.15 (J+1)
pH gel + Solrize® = 7.01 (J+1)
pH gel + Solrize® = 7.70 (J+2)
pH gel + Solrize® = 7.00 (J+3)
pH gel + Solrize® = 6.90 (J+4)
pH gel + Solrize® = 6.90 (J+5)

La conservation du produit à température ambiante n'entraîne pas d'odeur avant J+4 alors que le Solrize® Pralin émet des odeurs dès 24h après réalisation.

À 4°C, la conservation peut atteindre 7 jours après préparation sans que d'odeur particulière ne soit constatée. L'odeur reflète une évolution du produit pouvant entraîner une altération de ses propriétés.

Par ailleurs, une analyse économique a permis de calculer que le coût de revient des compositions selon l'invention est significativement moins important que le coût de revient du Solrize® Pralin.

La composition reste donc particulièrement stable au cours du temps une fois préparé, permettant ainsi une certaine souplesse dans son utilisation.

### Exemple 6 : test de mycorhization des plantes

### Procédure

Des plants de haricot, de vigne, de sorgho et de chrysanthème ont été pralinés à l'aide d'une préparation test réalisée sur la base des résultats obtenus au cours des essais décrits précédemment.
✔ Formulation de pralinage testée : 360 g Solrize® + 10 g Xanthan 80 + 1L H₂O.
✔ Rempotage / plantation : réalisation dans des contenant (pot) de 4L;
✔ Modalités :
   o Témoin (non pralinés) : 5 plantes (pots) par espèce, soit 20 pots ;
   ∘ « Solrize Gel » : 10 plantes par espèce pralinées à l'aide de la préparation testée décrite ci-dessus, soit 40 pots ;
✔ Support de culture : Terreau Prorize de la société Aquiland (33000 Landiras France).
✔ Durée de la culture : 6 semaines.

### Résultats

Après 6 semaines de cultures (délai suffisant pour avoir des racines mycorhizées, apparition des points d'infection entre Glomus et les racines de plantes), les racines de toutes les plantes ont été prélevées pour contrôler la mise en place de la mycorhization. Les 5 plantes témoins (non traitées avec la composition) étaient négatifs (non mycorhizés), permettant de valider l'essai. L'ensemble des 40 plants traités (pralinés) avec la composition ont montré une présence de la mycorhization.

Ces résultats permettent de démontrer que la composition selon l'invention permet une mycorhization des plants.

D'autres essais, notamment au vignoble en conditions réelle de plantation, ont été conduits sur des plants de vigne et ont permis de valider l'intérêt technique d'une telle formulation de pralinage « Gel » ainsi que son efficacité en obtenant notamment des bons taux de reprise et une meilleure qualité de plants, significativement différente de la modalité témoin non pralinée.

### Example 7: test de compatibilité avec des spores de Trichoderma

### Préparation du Mycogel® :

- Solrize®Pro (Agrauxine) : 360g
- Gomme Xanthan: 10g
- Eau : 1L

### Trichoderma :

- Spores pures de Trichoderma : 0,1g/l (10⁸ à 10⁹ CFU / g)

### Contrôle microbiologique :

Détermination des CFU Trichoderma/g sur Milieu PDA (*Potato dextrose agar*) et Détermination des CFU Bactérie/g sur Milieu PCA (*Plate CountAgar*)*.*
Le Mycogel et les spores de *Trichoderma* sont mélangés puis stocké à température ambiante et à 4°C pendant une semaine.

Un prélèvement est réalisé pour les deux modalités (température ambiante et à 4°C) et le contrôle microbiologique est réalisé.

Le prélèvement est mélangé dans du Tryptone sel pendant 30 minutes puis des dilutions successives sont réalisées. La lecture des boîtes est réalisée après 72 Heures d'incubation.

### Paramètres mesurés :

- CFU *Trichoderma* par g
- CFU Contaminant par g

### Résultats

| Modalités | Mélange Mycogel + spore Trichoderma à Température ambiante | Mélange Mycogel + spore Trichoderma à 4°C |
|---|---|---|
| CFU Trichoderma viable/g | 1.67 x 10⁷ CFU/g | 1.02 x 10⁷ CFU/g |
| CFU Bactérie viable/g | 3.01 x 10⁵ CFU/g | 1.97 x 10⁵ CFU/g |

### Conclusion :

Le mélange Mycogel® et *Trichoderma* est compatible. De plus, on n'observe pas de différence en termes de survie quelle que soit la température de conservation du gel.

### Exemple 8 : Test de conservation du Mycogel®

### Mise en place du protocole

Plant hôte : Vigne
Contenant : seau 3l
Solrize® Standard : Lot N°33
Dose Mycogel® : Traiter 120 plants de vigne
- Solrize®Pro : 360g
- Gomme Xanthan: 10g
- Eau : 1L

### Paramètres mesurés : 2 fois/mois

- Suivi de l'odeur émanant des seaux.
- Mesure du pH

### Résultats

Le Mycogel® formulé peut se conserver sans problèmes pendant 1 mois à 4°C. Au delà une odeur liée à la fermentation du Mycogel se dégage, bien que l'on n'observe quasiment pas de variation de pH..

Ces résultats montrent que les viticulteurs peuvent tremper le pied de vigne dans le Mycogel® et les conserver à 4°C quelques semaines avant la plantation.

Il est en revanche déconseillé de stocker les pieds de vignes dans le Mycogel® pendant 6 mois avant la plantation.

La conservation du gel seul (sans Solrize®) a donné le même type de résultats : Le gel peut se conserver pendant 1 mois à 4°C, et une odeur liée à la fermentation du gel se dégage au-delà. Sur les six mois de conservation, on observe quasiment pas de variation de pH.

### Pourcentage de mycorhization

Toutes les modalités à +6 mois, +4mois et +2mois pour les vignes à 4°C et fraîche ont été rempotées en pot de 1L avec du substrat Faliénor® puis placées en serre. En raison du maintien du pH, on soupçonne que la mycorhization restera possible et de qualité. Les essais sont en cours.

### Exemple 9 : conservation de plantes pralinées avant plantation

On a aussi testé le taux de mycorhization pour des plants conservés dans le Mycogel® à 4°C pendant un mois.

Dix pieds de vigne ont été trempés dans le Mycogel puis placés à 4°C. Après quatre semaines, les pieds de vigne ont été retirés de la chambre froide à 4°C et rempotés en pot de 1L avec du substrat Faliénor® puis placé en serre.

Après 9 semaines de culture, seul le pourcentage de mycorhization est observé sur les 10 pieds de vigne.

| Nombre de plant de vigne | Taux de mycorhization en % | Moyenne du taux de mycorhization en % |
|---|---|---|
| 1 | 25% | 21.2% Structures internes peu développées (présence de mycélium externe, vésicule) |
| 2 | 30% | |
| 3 | 20% | |
| 4 | 15% | |
| 5 | ND | |
| 6 | 25% | |
| 7 | 15% | |
| 8 | 10% | |
| 9 | 22% | |
| 10 | 29% | |

On note que le taux de mycorhization est de 21.2% pour la vigne. La conservation des pieds de vigne dans le Mycogel à 4°C pendant 1 mois n'affecte pas son efficacité et donc la mycorhization de la vigne.

## Revendications

1. Composition destinée au pralinage d'une plante après ajout d'eau, de granulométrie inférieure ou égale à 5mm comprenant un polyoside ramifié, ainsi qu'une substance d'intérêt, **caractérisée en ce que** ledit polyoside ramifié est la gomme xanthane, ladite gomme xanthane se présentant sous une forme pulvérulente, de particules ayant une taille inférieure à 177 microns, ladite substance d'intérêt étant un champignon endomycorhizien ou un microorganisme antifongique.

2. Composition selon la revendication 1, **caractérisée en ce que** ledit champignon endomycorhizien est un gloméromycète.

3. Composition selon la revendication 1, **caractérisée en ce que** ledit microorganisme antifongique est un *Trichoderma.*

4. Composition selon la revendication 1, **caractérisée en ce qu'**elle comprend un champignon endomycorhizien et un microorganisme antifongique.

5. Composition selon la revendication 4, **caractérisée en ce que** ledit microorganisme antifongique est un *Trichoderma.*

6. Composition selon l'une des revendications 1, 2 et 4 à 5, **caractérisée en ce que** la substance d'intérêt est un champignon endomycorhizien et qu'entre 3000 et 4000 propagules dudit champignon endomycorhizien sont présentes dans la composition apte au pralinage des plantes après ajout d'un litre d'eau.

7. Composition selon l'une des revendications 1 à 6, **caractérisée en ce que** l'on ajoute entre 6 et 15 g de ladite gomme xanthane, pour 1 litre d'eau pour obtenir une composition apte au pralinage des plantes.

8. Méthode de préparation d'une composition pour pralinage d'une plante, comprenant une étape d'ajout d'eau dans une composition selon l'une des revendications 1 à 7.

9. Utilisation d'une composition préparée par la méthode selon la revendication 8 pour réaliser un pralinage sur les racines d'une plante.

10. Méthode pour apporter une substance d'intérêt aux racines d'une plante, comprenant les étapes de (i) préparer une composition de pralinage par la méthode selon la revendication 8 et (ii) appliquer cette composition de pralinage aux racines de ladite plante.

11. Méthode selon la revendication 10, **caractérisée en ce que** ladite composition a été préparée quelques jours avant application sur la plante.

12. Méthode de plantation d'une plante, comprenant l'étape de planter une plante dans un substrat permettant la croissance de la plante, **caractérisée en ce que** les racines de la plante sont enrobées par une composition préparée par la méthode selon la revendication 8.

13. Méthode selon la revendication 12, **caractérisée en ce que** l'enrobage des racines de la plante a été réalisé plus de 12 heures avant l'étape de plantation de la plante.

## Patentansprüche

1. Zusammensetzung zum Einschlämmen einer Pflanze nach Zugabe von Wasser mit einer Teilchengrößenverteilung von weniger als oder gleich 5 mm, die ein verzweigtes Polysaccharid sowie eine nützliche Substanz umfasst, **dadurch gekennzeichnet, dass** das verzweigte Polysaccharid Xanthangummi ist, wobei das Xanthangummi in Form eines Pulvers von Teilchen mit einer Größe von weniger als 177 Mikron vorliegt, wobei die nützliche Substanz ein Endomykorrhizapilz oder ein fungizider Mikroorganismus ist.

2. Zusammensetzung nach Anspruch 1, **dadurch gekennzeichnet, dass** der Endomykorrhizapilz ein Glomeromycet ist.

3. Zusammensetzung nach Anspruch 1, **dadurch gekennzeichnet, dass** der fungizide Mikroorganismus ein *Trichoderma* ist.

4. Zusammensetzung nach Anspruch 1, **dadurch gekennzeichnet, dass** sie einen Endomykorrhizapilz und einen fungiziden Mikroorganismus umfasst.

5. Zusammensetzung nach Anspruch 4, **dadurch gekennzeichnet, dass** der fungizide Mikroorganismus ein *Trichoderma* ist.

6. Zusammensetzung nach einem der Ansprüche 1, 2 und 4 bis 5, **dadurch gekennzeichnet, dass** die nützliche Substanz ein Endomykorrhizapilz ist und dass sie zwischen 3000 und 4000 Brutorgane des Endomykorrhizapilzes umfasst, die in der Zusammensetzung zum Einschlämmen von Pflanzen nach Zugabe eines Liters Wasser vorhanden sind.

7. Zusammensetzung nach einem der Ansprüche 1 bis 6, **dadurch gekennzeichnet, dass** man zwischen 6 und 15 g Xanthangummi auf 1 Liter Wasser zugibt, um eine Zusammensetzung zum Einschlämmen von Pflanzen zu erhalten.

8. Verfahren zur Herstellung einer Zusammensetzung zum Einschlämmen einer Pflanze, das einen Schritt der Zugabe von Wasser in eine Zusammensetzung nach einem der Ansprüche 1 bis 7 umfasst.

9. Verwendung einer Zusammensetzung, die durch das Verfahren nach Anspruch 8 hergestellt wurde, zum Einschlämmen der Wurzeln einer Pflanze.

10. Verfahren zur Bereitstellung einer nützlichen Substanz für die Wurzeln einer Pflanze, das die Schritte (i) Herstellen einer Einschlämmzusammensetzung durch das Verfahren nach Anspruch 8 und (ii) Anwenden dieser Einschlämmzusammensetzung auf die Wurzeln der Pflanze umfasst.

11. Verfahren nach Anspruch 10, **dadurch gekennzeichnet, dass** die Zusammensetzung einige Tage vor dem Anwenden auf die Pflanze hergestellt worden ist.

12. Verfahren zum Pflanzen einer Pflanze, umfassend den Schritt des Pflanzens einer Pflanze in ein Substrat, das das Wachstum der Pflanze gestattet, **dadurch gekennzeichnet, dass** die Wurzeln der Pflanze mit einer durch das Verfahren nach Anspruch 8 hergestellten Zusammensetzung eingehüllt werden.

13. Verfahren nach Anspruch 12, **dadurch gekennzeichnet, dass** das Einhüllen der Wurzeln der Pflanze mehr als 12 Stunden vor dem Schritt des Pflanzens der Pflanze durchgeführt worden ist.

## Claims

1. A composition intended for dip treatment of a plant after addition of water, having a having a particle size of less than or equal to 5 mm comprising a branched polysaccharide and also a substance of interest **characterized in that** said branched polysaccharide is xanthan gum, said xanthan gum being in a pulverulent form of particles having a size of less than 177 microns, said substance of interest being an endomycorrhizal fungus or an antifungal microorganism.

2. The composition according to claim 1, **characterized in that** said endomycorrhizal fungus is a glomeromycete.

3. The composition according to claim 1, **characterized in that** said antifungal microorganism is a *Trichoderma.*

4. The composition according to claim 1, **characterized in that** it comprises an endomycorrhizal fungus and an antifungal microorganism.

5. The composition according to claim 4, **characterized in that** said antifungal microorganism is a *Trichoderma.*

6. The composition according to one of claims 1, 2 and 4 to 5, **characterized in that** said substance of interest is an endomycorrhizal fungus and that between 3000 and 4000 propagules of said endomycorrhizal fungus are present in the composition qualified for dip treatment of plants after addition of 1 liter of water.

7. The composition according to one of claims 1 to 6, **characterized in that** between 6 and 15 g of said xanthan gum are added for 1 liter of water to obtain a composition qualified for dip treatment of plants.

8. A method for preparing a composition for dip treatment of plants, comprising a step of adding water to a composition according to one of claims 1 to 7.

9. The use of a composition prepared according to the method of claim 8, for carrying out a dip treatment on the roots of a plant.

10. A method for providing a substance of interest to the roots of a plant, comprising the steps of (i) preparing a dip-treatment composition by the method according to claim 8 and (ii) applying this dip-treatment composition to the roots of said plant.

11. The method according to claim 10, **characterized in that** said composition was prepared a few days before application to the plant.

12. A method for planting a plant, comprising the step of planting a plant in a substrate which allows growth of the plant, **characterized in that** the plant roots are coated with a composition prepared by the method of claim 8.

13. The method according to claim 24, **characterized in that** the coating of the roots of the plant was carried out more than 12 hours before the step of planting the plant.
